**Europäisches Patentamt**

**European Patent Office**

**Office européen des brevets**

(19)

(11) Veröffentlichungsnummer: **0 223 065**
**A2**

(12) # EUROPÄISCHE PATENTANMELDUNG

(21) Anmeldenummer: **86114244.6**

(22) Anmeldetag: **15.10.86**

(51) Int. Cl.⁴: **H 04 M 1/274**

(30) Priorität: **16.10.85 DE 3536844**

(43) Veröffentlichungstag der Anmeldung: **27.05.87**
**Patentblatt 87/22**

(84) Benannte Vertragsstaaten: **AT CH DE LI NL**

(71) Anmelder: **DORNIER SYSTEM GmbH, Postfach 1360, D-7990 Friedrichshafen (DE)**

(72) Erfinder: **Reimer, Dietrich, Dr. Dipl.-Phys., Waldweg 10, D-7758 Daisendorf (DE)**
Erfinder: **Zimmermann, Rolf, Dr. Dipl.-Ing., Spiegelberg 3, D-7997 Immenstaad (DE)**
Erfinder: **Beiner, Peter, Buchenstrasse 15, CH-4500 Solothurn, Fa. Autophon (CH)**
Erfinder: **Allemann, Marco, Lischenweg 15, CH-2500 Biel, Fa. Autophon (CH)**

(74) Vertreter: **Landsmann, Ralf, Dipl.-Ing., Kleeweg 3, D-7990 Friedrichshafen 1 (DE)**

(54) Verfahren für ein multifunktionales Telekommunikationsgerät.

(57) Die Minidatenbank für ein multifunktionales Telekommunikationsgerät zum selbsttätigen Wählen von Telefonnummern, Bildschirmtextseiten, Kundennummern, Paßwörtern und anderen Zielnummern, ist an eine oder mehrere Leitungen angeschlossen. Sie besteht aus einem Kompaktterminal mit Bildschirmtelefon, einem an Btx-Zentralen anschließbaren Bildschirmtextendgerät mit Dialog- und Speicherfunktionen, einer Tastatur, einem Datenspeicher und einer Kurzwahleinrichtung mit auf einem Bildschirm darstellbarem Speicherinhalt, bei dem alle Hauptgruppen eigene und untereinander über serielle oder parallele Buskopplungen verknüpfte Mikroprozessoren aufweisen. Durch Betätigen einer oder mehrerer Tasten der Tastatur (36) wird eine Auswahl der im Datenspeicher (40) gespeicherten Zielnummern und zugehöriger weiterer Daten mit jeweils vorangestellten Menüziffern auf dem Bildschirm (66) dargestellt. Durch Eintasten einer dieser Menüziffern wird die unter dieser Ziffer adressierbare Zielnummer in codierter Form auf einer zugehörigen Leitung (1, 2, 85, 86, 87, 88) übertragen.

DORNIER SYSTEM GMBH

7990 Friedrichshafen


Reg. S 519  EU


Verfahren für ein multifunktionales Telekommunikationsgerät


Die Erfindung betrifft ein Verfahren für eine multifunktionale Telekommunikationseinrichtung gemäß dem
Oberbegriff von Anspruch 1.


Kommunikationsdienste, wie Telefon, Telex, Telefax, Bildschirmtext (Btx), Kabeltext u.a. werden über Leitungsnetze
abgewickelt. Die meisten dieser Dienste werden mit dem Übergang zum digitalen und dienstintegrierten Telefonnetz über
ein einheitliches Netz ermöglicht. Benutzer solcher Dienste
bevorzugen Multifunktionsgeräte, in welchen die häufigsten
Kommunikationsformen in einem Gerät zusammengefaßt sind.
Neben dem Telefon sind hauptsächlich Auskunfts- und Informationssysteme für gewerbliche und private Benutzer interessant, die über Btx zur Verfügung stehen. In größeren Institutionen, wie Behörden und Unternehmen, wird neben dem Btx-
Dienst oft auch ein internes Auskunfts- oder Rechnersystem

- 2 -

benutzt, aus welchem verfügbare Daten abgerufen oder mit welchem Kommunikationsdienste, wie elektronische Post u.a. abgewickelt werden können.

Zum Beispiel sind aus den DE-OS 32 28 210 und DE-OS 33 07 375 Multifunktionsgeräte als integrierte Kompaktgeräte in Form von Sichtschirmtelefonen bekannt. Die darin beschriebenen Geräte sind mit einer Fernsprecheinrichtung mit Komfortfunktionen und einer an Btx-Zentralen anschließbaren Einrichtung für Text- und Speicherfunktionen und einer als Sichtschirm ausgebildeten Anzeigevorrichtung ausgestattet. Die Einrichtungen sind über einen Daten-, Adreß- und Steuerbus miteinander verbunden, wobei die Fernsprecheinrichtung mit Komfortfunktionen aus einer Kurzwahleinrichtung besteht, deren vollständiger Speicherinhalt auf dem Sichtschirm darstellbar ist.

Von Nachteil ist hierbei, daß bei diesen Kompaktgeräten alle Funktionen und Teilkomponenten über nur einen Daten-, Adreß- und Steuerbus laufen und nur über einen Prozessor miteinander verknüpft sind. Eine Strukturerweiterung wird dadurch zu kompliziert und eine Vermischung von Telefonie und Datenübertragung ist möglich.
Nachteilig ist ferner, daß diese Geräte nur über einen Modem-Anschluß an öffentliche Btx-Zentralen verfügen und in ihrer Tastatur nur einige programmierbare Tasten für komplexe Betriebsabläufe verwenden, die je nach Betriebsart unterschied-

- 3 -

liche Funktionen auslösen.

Aufgabe der Erfindung ist es, ein Verfahren für ein multifunktionales Telekommunikationsgerät zu schaffen, mit dem eine Speicherung und Nutzung von verschiedenen Telefon-, Btx-Seiten, Kundennummern, Paßwörtern, sonstigen Zielnummern und persönlichen Daten in einer besonders benutzerfreundlichen Form möglich ist. Damit sollte eine zusätzliche Komponente in Form eines multifunktionalen Endgerätes geschaffen werden, die mit vorhandenen Komfortgeräten kombinierbar ist und eine einfache Nutzung von Kommunikationen erlaubt.

Gelöst wird die gestellte Aufgabe erfindungsgemäß durch die kennzeichnenden Merkmale von Anspruch 1. Vorteilhafte Weiterbildungen ergeben sich aus den Unteransprüchen.

Der Vorteil der Erfindung besteht darin, daß durch Zusammenfassung zahlreicher für die verschiedensten Kommunikationsbereiche benötigten Funktionen zu einem multifunktionalen Telekommunikationsgerät ein für den Benutzer einfach zu bedienendes Endgerät entsteht. Damit kann ein Benutzer durch Betätigen einer oder mehrerer Tasten eine Auswahl der im Datenspeicher der Datenbank gespeicherten Zielnummern und zugehörigen weiteren Daten treffen, die auf dem Bildschirm der Anzeigeeinheit mit jeweils vorangestellten Ziffern (sogenannte Menüziffern) dargestellt werden. Durch Eintasten

/4

einer dieser Menüziffern wird die unter dieser Ziffer adressierbare Zielnummer in codierter Form auf eine zugehörige Leitung zur Kommunikation übertragen. Je nach Anschlußart werden dabei die Zielnummern z.B. beim Dienst Fernsprechen als Impulswahlsignale oder als Mehrfrequenzwahlsignale, beim Dienst Btx als Btx-Codes oder bei anderen Diensten als andere, diesen Diensten entsprechende Datensignale auf die Leitung gegeben und übertragen. Die Auswahl der angezeigten Zielnummern und Daten nach einzelnen Diensten (z.B. Fernsprechen, Btx) und nach einzelnen Netzen (z.B. Postnetz, Inhausnetz) erfolgt durch Betätigen einer oder mehrerer Tasten auf der Tastatur. Die zu den einzelnen Zielnummern gespeicherten zugehörigen Daten werden nach unterschiedlichen Kategorien angezeigt. Beim Dienst Fernsprechen z.B. in den Kategorien Firmenname, Person, Ort, Straße, Funktion in der Firma. Beim Dienst Btx z.B. in den Kategorien Anbieter, Dienst-Angebot, Abteilung, Adresse u.a. Die Anzeige der Zielnummern und zugehörigen Daten erfolgt dabei in alphabetischer Reihenfolge der Eintragungen einer ausgewählten Datenkategorie. Diese Kategorie (z.B. Firmenname oder Angebot) wird durch Betätigen einer oder mehrerer Tasten ausgewählt. Die für den Benutzer der Datenbank wesentlichsten Datenkategorien können durch Betätigen nur einer Taste ausgewählt werden. Zum Beispiel beim Dienst Fernsprechen eine Taste für die wichtigsten Teilnehmernamen, eine Taste für die Datenkategorie Firmenname, eine Taste für die Datenkategorie

- 5 -

Abteilung oder beim Dienst Btx eine Taste für die Datenkategorie Angebot. Die Formulareintragungen werden vereinfacht, indem in den Formularfeldern bereits bestehende Eintragungen, z.B. die letzte Eintragung, bei Formularaufruf
angezeigt werden. Mit dem nächsten Eintrag kann überschrieben
werden. Nach erfolgter Abspeicherung des neuen Eintrages wird
sofort wieder dasselbe Formular für den nächsten Eintrag angezeigt, sofern der Benutzer die hierfür vorgesehene spezielle Speichertaste betätigt.

Die für die Minidatenbank erforderliche Gerätesoftware hält
für den Bedienerdialog mehrere Sprachen, das heißt wenigstens
zwei gespeichert. Dabei wird durch einmalige Initiierung des
Gerätes die Geräteversion und damit die gewünschte Sprache
des Dialogs festgelegt. Während der Benutzung der Minidatenbank wird durch entsprechende Adreßrechnungen automatisch auf
die relevanten Bedienerhinweise im Speicher zugegriffen, wobei diese dann dialoggerecht auf dem Bildschirm angezeigt
werden.

Ein Ausführungsbeispiel dieser multifunktionellen Telekommunikationseinrichtung als Minidatenbank ist folgend beschrieben und durch ein Blockschaltbild erläutert.

Die Figur zeigt das Blockschaltbild einer Minidatenbank in
einer Grundversion. An eine Leitung 1 und 2 sind über eine
Leitungsanpassung 4 eine Sprechschaltung 6 mit Hör- und Sprechmuschel 8, eine Potentialtrennung 10 mit Freisprecheinrichtung 12 angeschlossen. Aus der Leitungsanpassung 4 wird eine Notspeisung 14 versorgt, und es sind kommunizierend angeschlossen eine Wähleinheit 16, ein Gabel-/Gebühren-Impulsgeber 18 und ein Rufdetektor 20 mit Potentialtrennung 22. Die Wähleinheit 16 und der Impulsgeber 18 sind auf einen Bus 24 geschaltet, an den außerdem eine Telefontastatur 28 sowie über eine weitere Potentialtrennung 30 und anschliessende Schnittstelle (UART) 32 ein weiterer Bus 34 angeschlossen ist. Dieser erste Bus 24 mit den angeschlossenen Baugruppen wird vom Wählprozessor 26 gesteuert. An den zweiten Bus 34 sind zugeschaltet eine Alpha- und Funktionstastatur 36, ein programmierbarer Speicher (PROM) 38, ein Schreib-/Lesespeicher mit Register (RAM) 40, eine Uhr mit Kalender 42 und ein Zentralprozessor 44. In diesem Zentralprozessor 44 mit den angeschlossenen Baugruppen ist die Minidatenbank realisiert. Der Zentralprozessor 44 steuert weiterhin über den Bus 34 die Freisprecheinrichtung 12. Der Zentralprozessor 44 wird versorgt aus einem Netzteil 46 mit Ausgängen +5 Volt und $\pm$12 Volt, er steht kommunizierend in Verbindung zu einem Monitor, einem Btx-Prozessor 48 und über eine Rückstell-Leitung 50 mit einem Schnittstellenprozessor 52 und über den Btx-Prozessor 48 noch mit einem Bus 54. An den Bus 54 sind angeschlossen ein programmierbarer Speicher (PROM) 56 mit maximal 32 kB, eine Schreib-Lese-Speichersteuerung 58, die mit einem Schreib-Lesespeicher (RAM) 60 für Btx- und Anzeigeseiten und einem Btx-Decoderbaustein (EUROM) 62 verbunden sind, die außerdem am Bus 54 angekoppelt sind. Der Baustein 62 ist über eine RGBS-Leitung 64 mit einem Farbmonitor 66 verbunden. Der Bus 54 steht darüber hinaus noch über eine Buskopplung 68 mit einem weiteren Bus 70 in Verbindung.

Der Btx-Prozessor 48 kommuniziert intern mit dem Schnittstellenprozessor 52, der seinerseits an den Bus 70 angeschlossen ist und mit einer Modem-Anpassung 72 an ein Modem (D-BT03), sowie mit einer Modem-Anpassung 74 mit einem Modem (D-1200S) verbunden werden kann. An den Bus 70 sind angeschlossen ein programmierbarer Lesespeicher (PROM) 76 mit maximal 32 kB, ein programmierbarer Schreib-/Lesespeicher (RAM) 78 mit maximal 32 kB und über eine Schnittstelle für Ein- und Ausgabe (SIO) 80 eine Standleitungsanpassung 82 mit je einer Anpassung von 64 kbit/sec und V. 24, sowie eine Schnittstelle 84 für einen Druckeranschluß. Das Netzteil 46 ist verbunden mit einem weiteren Netzteil 86, welches zugleich eine mechanische Schaltverbindung zu den am Bus 24 angeschlossenen Komponenten ist.

14.10.86
Kr/mr

DORNIER SYSTEM GMBH

7990 Friedrichshafen

Reg. S 519 EU

P a t e n t a n s p r ü c h e :

1. Verfahren für ein multifunktionales Telekommunikationsgerät mit Bildschirmtelefon, Datenspeicher als Minidatenbank und Tastatur zum selbsttätigen Wählen von Zielnummern verschiedener Dienste wie Telefon- Btx- und
Kundennummern, Paßwörtern u.a. und einer Anschlußmöglichkeit an Leitungen zur Datenübertragung,  d a -
d u r c h  k e n n n z e i c h n e t,  daß mittels der
Tastatur (36) auf jede gewünschte im Datenspeicher (40)
gespeicherte Zielnummer über beliebige Kategorien, z.B.
auf die Fernsprechnummer einer Person innerhalb einer
Organisation, über den Personennamen oder über den Namen
der Organisation oder die Funktion oder den Ortsnamen
usw.  als Suchbegriff zugegriffen und anschließend die
gewählte Zielnummer mit zugehörigen Daten und jeweils
vorangestellten Menueziffern auf dem Bildschirm darge-

- 2 -

stellt und durch Eintasten einer Menueziffer die
hierunter adressierte Zielnummer codiert auf eine der
Leitungen (1, 2, 85, 86, 87) übertragen wird.

2. Verfahren nach Anspruch 1, dadurch gekennzeichnet, daß Zielnummern beim Dienst Fernsprechen je nach Anschlußort als Impuls- oder Mehrfrequenzwählsignale, beim Dienst Btx als Btx-Codes und bei anderen Diensten als diesen entsprechende Datensignale auf eine der Leitungen (1, 2, 85, 86, 87) übertragen werden.

3. Verfahren nach den Ansprüchen 1 oder 2, dadurch gekennzeichnet, daß die Auswahl der auf einer Anzeigeeinheit (66) angezeigten Zielnummern und zugehöriger weiterer Daten nach einzelnen Diensten, (z.B. Fernsprechen, BTX) und nach einzelnen Netzen, z.B. Postnetz, Inhausnetzt nach Betätigen der Tastatur (36) erfolgt.

4. Verfahren nach den Ansprüchen 1 bis 3, dadurch gekennzeichnet, daß die zu den einzelnen Zielnummern gespeicherten zugehörigen Daten nach unterschiedlichen Kategorien angezeigt werden.

- 3 -

5.  Verfahren nach den Ansprüchen 1 bis 4, dadurch gekennzeichnet, daß die Zielnummern und zugehörigen Daten in alphabetischer Reihenfolge der Eintragung einer ausgewählten Kategorie angezeigt und diese mittels der Tastatur (36) ausgewählt werden.

6.  Verfahren nach den Ansprüchen 1 bis 5, dadurch gekennzeichnet, daß die Anzeige der Zielnummern mit zugehörigen Daten die Daten der gewählten Kategorie an herausragender Stelle und Daten anderer Kategorien nachgeordnet und bei Platzmangel abgekürzt anzeigt.

7.  Verfahren nach den Ansprüchen 1 bis 6, dadurch gekennzeichnet, daß die für einen Benutzer wesentlichen Kategorien nur mit einer Taste auswählbar sind.

8.  Verfahren nach einem der Ansprüche 1 bis 7, dadurch gekennzeichnet, daß unter den weiteren zu einer Zielnummer gehörenden Daten Verweise auf Paßwörter, Codes oder Teilnehmernummern eintragbar sind, deren Aussendung auf die zugehörige Leitung (1, 2, 86, 86, 87 oder 88) entweder vollautomatisch oder nach nur einer Tastenbetätigung erfolgt.

9.  Verfahren nach einem der Ansprüche 1 bis 8, da-

- 4 -

durch gekennzeichnet, daß die Eintragung der Zielnummern und zugehörigen Daten in entsprechende Formularfelder erfolgt, die auch während bestehender Fernsprech- oder BTX-Verbindungen beschreibbar sind.

10. Verfahren nach einem der Ansprüche 1 bis 9, dadurch gekennzeichnet, daß in Formularfeldern schon bestehende Eintragungen bei Formularaufruf angezeigt werden und für den nächsten Eintrag überschreibbar sind und daß nach Speicherung eines neuen Eintrages sofort dasselbe Formular für den nächsten Eintrag angezeigt wird, nachdem eine hierfür vorgesehene Speichertaste WEI auf der Tastatur (36) betätigt wird.

11. Verfahren nach einem der Ansprüche 1 bis 10, dadurch gekennzeichnet, daß die zuletzt benutzte oder angezeigte Zielnummer und zugehörige weitere Daten (z.B. Firmenname oder Adresse) in ein Eingabeformular für einen Neueintrag desselben oder anderer Dienste übernommen werden.

12. Verfahren nach einem der Ansprüche 1 bis 11, dadurch gekennzeichnet, daß bei erfolglosen Versuchen, eine Verbindung zu einem Teilnehmer eines Dienstes aufzubauen, die Zielnummer dieses Teilnehmers in einem anderen Dienst zur Anwahl automatisch angezeigt wird und diese Anwahl mit einem einzigen Tastendruck auslösbar ist.

13. Verfahren nach einem der Ansprüche 1 bis 12, dadurch gekennzeichnet, daß neben dem Datenspeicher als Minidatenbank mit Zielnummern und zugehörigen Daten eine weitere Datenbank vorgesehen ist, in welche Daten, Uhrzeit, Zielnummern und weitere Daten speicherbar und nach verschiedenen Kategorien anzeigbar sind.

14. Verfahren nach einem der Ansprüche 1 bis 13, dadurch gekennzeichnet, daß Eintragungen von Daten und Zielnummern mit Zeitangabe nach verschiedenen Sortierungen angezeigt werden, die vor oder nach einem bestimmten Zeitpunkt liegen.

15. Verfahren nach einem der Ansprüche 1 bis 14, dadurch gekennzeichnet, daß die Eintragungen verschiedener Datenfelder mit Attributen versehen werden, welche die Darstellung der Daten besonders strukturieren oder bestimmte Daten hervorheben, z.B. farbig hinterlegen, in inversen Zeichen- und Hintergrundfarben darstellen, blockweise blinken lassen.

16. Verfahren nach einem der Ansprüche 1 bis 15, dadurch gekennzeichnet, daß Zielnummern und Daten von der ersten Datenbank ganz oder teilweise in die zweite Datenbank kopierbar sind, um z.B. eine Fernsprechnummer eines Teilnehmers mit einer Notiz zu ergänzen und daß umgekehrt ein Datenaustausch von der zweiten Datenbank in die erste vorgesehen ist.

17. Verfahren nach einem der Ansprüche 1 bis 16, dadurch gekennzeichnet, daß in der Minidatenbank ein Bedienerdialog in wenigstens zwei Sprachen gespeichert ist, wobei durch einmalige Initiierung die Wiedergabe und die gewünschte Sprache festgelegt und während der Benutzung automatisch durch entsprechende Adreßrechnungen auf die relevanten Bedienerhinweise im Speicher (38) zugegriffen wird und diese dialoggerecht angezeigt werden.

14.10.86
Kr/mr

LTG.1  LTG.2

8

85   86   87   88
84 KBIT  V.24

FREISPRECH-EINRICHTUNG  POT.-TRNG.  10

LEITUNGS-ANPASSUNG  4

SPRECH-SCHALTUNG  6

+5V

NETZTEIL  86

NETZTEIL  46

D-BT03 ANPASSUNG  72

D1200S ANPASSUNG  74

STANDLTG. ANPASSUNG  82

DRUCKER-INTERFACE  84

12

NOT-SPEISUNG  14

VAEHL-EINHEIT  16

GABEL/GEB.IMPULS  18

RUF-DETEKTOR  20

POT.-TRNG.  22

+5V

+5V

+/- 12V

MONITOR

SIG  80

70

TELEFON-TASTATUR  28

VAEHL-PROZESSOR  26

24

PROM MAX.32KB  76

RAM MAX.32 KB  78

POTENTIAL-TRENNUNG  30

ZENTRAL-PROZESSOR  44

NETZ EIN

RESET  50

SCHNITTSTEL-LEN-PROZESSOR  52

BTX-PROZESSOR  48

BUS-KOPPLUNG  68

UART  32

34

54

ALPHA- UND FUNKTIONSTASTEN  36

PROM  38

RAM REGISTER  40

UHR  42

PROM MAX.32 KB  56

SPEICHER-STEUERUNG  58

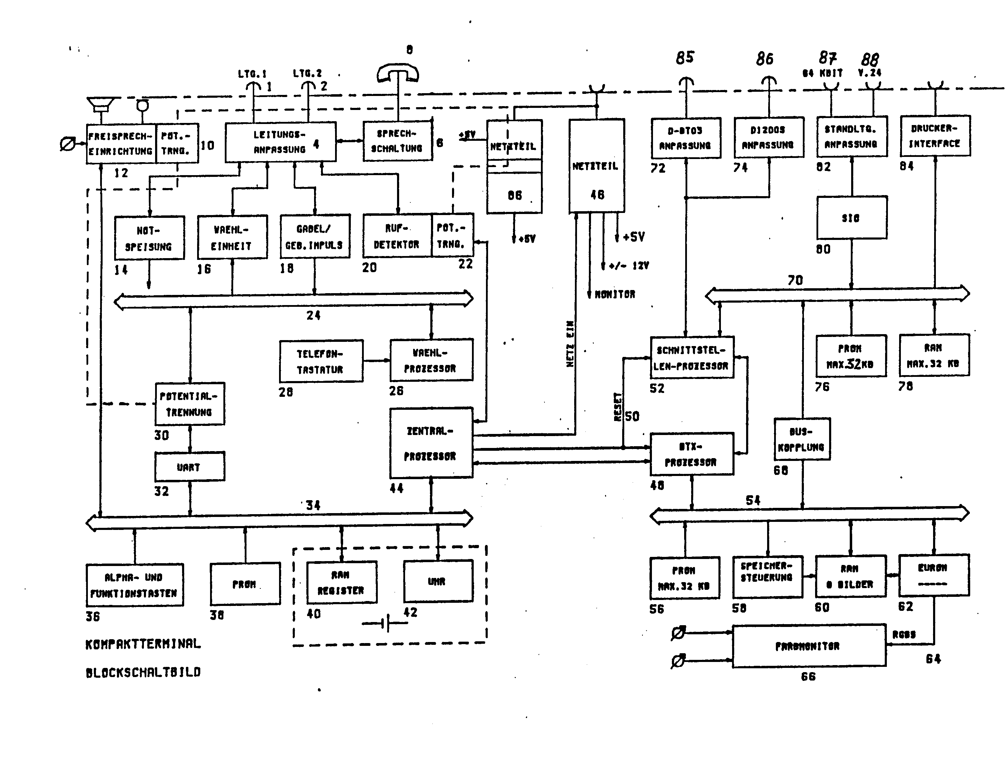

RAM 8 BILDER  60

EPROM  62

KOMPAKTTERMINAL

BLOCKSCHALTBILD

FARBMONITOR  66

RGBS  64

0223065